# EUROPEAN PATENT APPLICATION

(11) **EP 3 492 925 A2**
(43) Date of publication of application: **05.06.2019**
(21) Application number: 18209237.9
(22) Date of filing: 29.11.2018
(51) Int. Cl.: G01N 35/04

(54) **SAMPLE AND SUPPLIES TRACK**

(30) Priority: 29.11.2017 LU 100524
(71) Applicant: Stratec SE, 75217 Birkenfeld (DE)
(72) Inventor: GRÖHBÜHL, Bernd, 76275 Ettlingen (DE)
(74) Representative: Tegethoff, Sebastian

(57) **Abstract**

The invention relates to a device for supplying multiple work-cell bound analyzers as well as multiple cores of a single analyzer with patient samples, reagents, consumables comprising a track device that are located in the middle between or at one side of analyzer and cores.

## Description

### Field of the invention

The field of the present invention relates to multiple analyzer systems that are arranged in a work-cell (cluster) configuration, as well as, alternatively, to one single analyzer that consists of multiple parallel cores (basic analyzer modules) to provide a scalable system architecture.

### Background of the invention

Automated analyser systems for use in clinical diagnostics and life sciences are produced by several companies. For example, the Stratec Biomedical AG, Birkenfeld, Germany, produces a number of devices for specimen handling and detection for use in automated analyser systems and other laboratory instrumentation.

Preparation and analysis of samples is part of everyday practice in laboratory or clinical work. Often the preparation requires mixing of several components of a sample. Mixing can be required, for instance, after a further component to a sample has been added, or in the case of particles suspended in a liquid sample.

STRATEC developed analyzers as well as ones developed by companies present in the IVD market often face a variant of throughput requests for one and the same solution, depending on the use case and environment of the individual installation.

Different throughput requirements are usually solved by designing a family of analyzers with variations in technological approaches to allow for addressing these differences. Said variations drive a certain probability of leading to variances in test results, once the differences reach into result relevant basic modules of the analyzers as for examples incubators, washer modules etc.

One upcoming approach to avoid these variances is to install work-cells of identical analyzers to address higher throughput or use multiples of identical core modules to adapt to various throughput needs.

For both scenarios, it becomes more and more beneficial to implement one scalable supply design for loading and unloading of patient samples, reagents, consumables and/or other bulk articles.

The design for throughput scalability of analyzer systems supporting identical applications is hard to handle and can be related to the following disadvantages:
- High cost in design, manufacturing and service and probably negative reliability impact with completely different analyzer designs (family of analyzers).
- Later time to market of a solution due to higher design, manufacturing and verification/validation effort for an analyzer family
- High cost and low flexibility with existing LAS solutions for connecting analyzers to a work-cell or cluster configuration

### Object of the invention

It is an object of the invention to provide a strategic hardware approach to supply one analyzer or multiple analyzers as described above with patient samples, reagents, consumables and/or other kind of supplies materials.

### Summary of the invention

The present invention provides a track device for transport of carrier for supplying multiple work-cell bound analyzers as well as multiple cores of a single analyzer with samples and/or material for processing or analyzing samples, wherein the track device comprises
- at least two tracks for transportation at least one carrier;
- at least one lane change drive allowing to move a carrier from one track to another track; and
- at least one of the at least two tracks having access to an analyzer.

The at least two tracks can be guided rails.

In a further aspect of the invention, a first of the at least two tracks can be configured for transporting material for loading and unloading material and a second one of the at least two tracks can be configured for transporting material for access of a work cell or core of a single analyzer.

The track device may further be configured to comprise at least three tracks for transportation, wherein the outer tracks are accessible for a neighboring work cell or core of a single analyzer.

It is intended that the tracks for transportation can be located in the middle between or at one side of a work-cell bound analyzer or multiple core of a single analyzer.

In a further embodiment, the track device may further comprise at least four tracks, wherein one of the tracks located in the middle is configured to transport material in a forward direction and one of the tracks in the middle is configured to transport material in a reverse direction.

In another aspect of the invention, the track change drive can be located at one end or in-between the track devices.

Another aspect of the invention refers to the use of a track device as described in multiple work-cell bound analyzers as well as multiple cores of a single analyzer.

Still other aspects, features, and advantages of the present invention are readily apparent from the following detailed description, simply by illustrating a preferable embodiments and implementations. The present invention is also capable of other and different embodiments and its several details can be modified in various obvious respects, all without departing from the spirit and scope of the present invention. Accordingly, the drawings and descriptions are to be regarded as illustrative in nature, and not as restrictive. Additional objects and advantages of the invention will be set forth in part in the description which follows and in part will be obvious from the description, or may be learned by practice of the invention.

### Summary of the figures

The invention will be described based on figures. It will be understood that the embodiments and aspects of the invention described in the figures are only examples and do not limit the protective scope of the claims in any way. The invention is defined by the claims and their equivalents. It will be understood that features of one aspect or embodiment of the invention can be combined with a feature of a different aspect or aspects of other embodiments of the invention. It shows:
- Figure 1: Back to back arrangement of analyzers/cores with Track devices in the middle
- Figure 2: Linear arrangement of analyzers/cores with Track devices at one side
- Figure 3: Exemplary design of a Track device with a lane change drive using aluminum extrusion profiles and motor driven belts for rack transport
- Figure 4: Exemplary schematic with sensor positions over drive sections

### Detailed description of the invention

The invention focuses on a modular design concept for a Track device, able to supply
- multiple work-cell bound analyzers as well as
- multiple cores of a single analyzer
with patient samples, reagents, consumables and/or other kinds of supplies materials. The concept shall be operable with various future OEM analyzer developments.

Loading and unloading of a Track device based solution is realized via centralized Loading/Unloading Modules that provide interfaces to the users and towards the Track devices. If necessary, these Loading/Unloading Modules can also comprise identification means like a code reader to e.g. check for a patient sample ID, a reagent type or expiration date, a consumable type or ID or others. With their interface to the user they allow for manual loading and unloading of all relevant supplies, their interfaces towards the tracks allow for distributing or receiving carriers to and from the track lanes.

A solution is described providing patient samples exemplary via four position sample racks to a cluster of analyzers or cores. This is exemplarily for the overall concept. The concept is not limited to using four position sample racks.

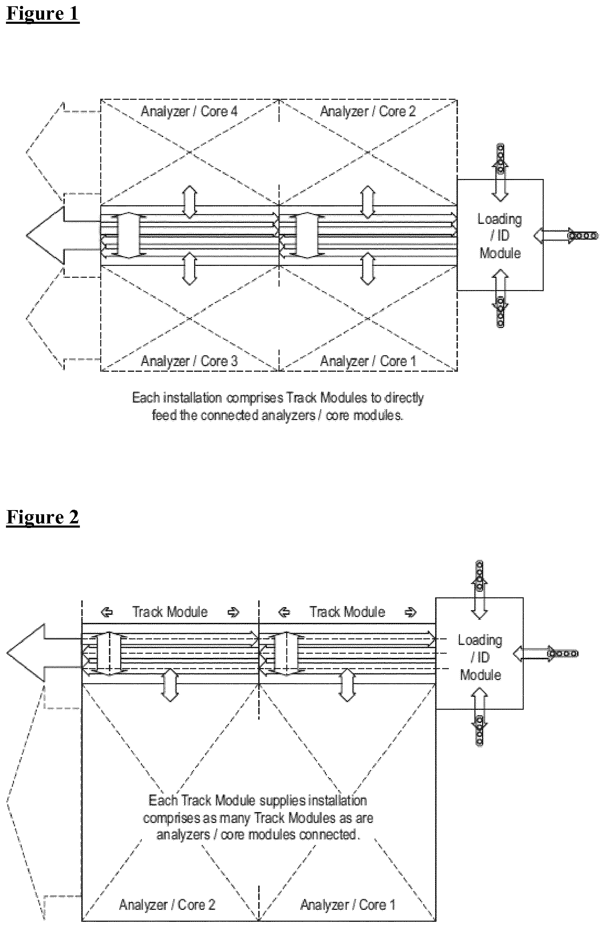

The way multiple analyzers or cores can be oriented in a system setup may also vary. Figure 1 shows a back to back arrangement with the track devices being located in the middle between analyzers/cores. A centralized unit for loading, unloading and if necessary identification of the supplies is attached to one end, however position for loading/unloading can be chosen freely and there might be more than one unit for it.

In this scenario there are four track lanes running along each Track device. The ones in the middle are ,fast forward' and ,fast reverse' lanes to pass-by analyzers or cores. The outer ones are directly accessible by analyzers/cores to access samples, reagents or supplies. The number of these lanes can of course vary, depending on specific needs and throughput. Where and how analyzers or cores interact with track lanes is highly depending on the design and installation and is not described in detail. It can e.g. be a pick and place handling accessing consumables or a pipettor reaching out of a analyzer core to aspirate a sample or a reagent out of a tube or bottle. A track device installation can also provide multiple different supplies.

At the end of each Track device there is one ,lane change drive' able to allow a carrier to switch lanes (comp. figure 1). Position and number of these drives may vary, depending on a specific solution. The concept of a lane change drive is describe in more detail later.

As an alternative, the figure 2 shows a linear positioning of analyzers/cores. Track devices are located at one side of analyzers/cores. A centralized unit for loading, unloading and if necessary identification of the supplies is attached to one end.

In figure 2, there are three track lanes running along each module. The upper ones would be ,fast forward' and ,fast reverse' lines to pass-by analyzers or cores. The lower one would directly be accessible by analyzers/cores to load/unload samples, reagent or supplies. Where and how analyzers or cores interact with track lanes is again highly depending on the design and installation and is not described in detail.

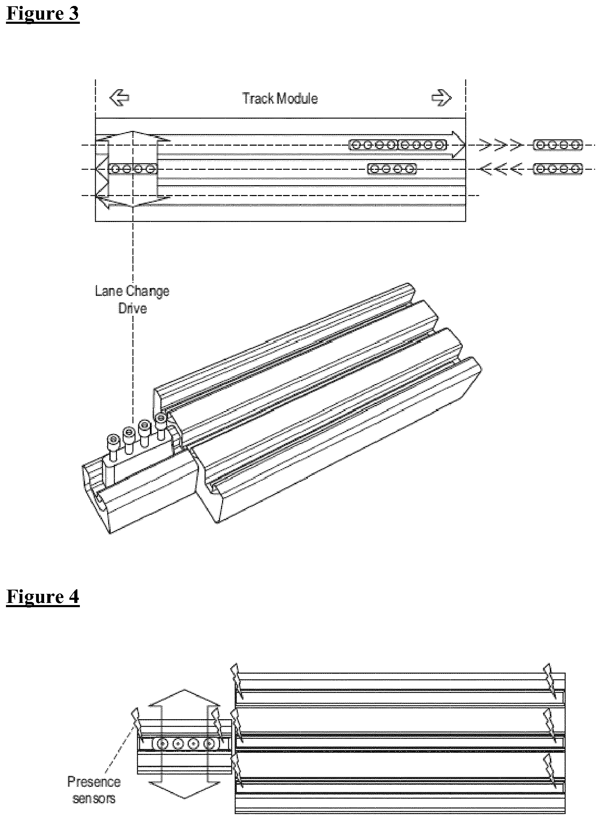

A lane change drive is one possible solution to allow a carrier to change the lanes on a track device. In schematics of figure 3 it is described exemplarily with a 4 position carrier. Once a rack or carrier has to move over to a neighboring track without changing the lane, the lane change drive would be moved to the relevant lane and the rack will be transported through the lane change drive section.

In case a lane change is needed the rack would be transported into the lane change drive section, stay there while the drive moves to a different lane and from there be transported further. As alternatives or add-ons track switches can be inserted to a Track device for redirecting a carrier or rack.

Several Track devices connected to each other allow for a big variety of routing options and for a wide variety of error recovery modes in case of e.g. one lane drive errors out. The lanes in such an installation would allow for being used as a temporary storage or buffer for racks or carriers to equalize throughput or processing variances.

Sensors at each end of one specific drive section allow for presence sensing and counting of carriers in the relevant sections (figure 4). When e.g. a rack is moved into the lane change drive, its front surface would trigger the entry sensor. Once fully moved into the drive section, the entry sensor signal would drop and a little later the exit sensor would be triggered. Between the last two sensor signal switches the carrier would be perfectly positioned in the lane change drive section.

Sensor type, numbers and logic might vary depending on the preferred and approached solution.

The advantages related to the subject matter of the invention can be summarized as follows:
- The invention offers a generic approach to supply work-cell bound analyzers as well as a multi-core single analyzer with patient samples, reagents, consumables and/or other kinds of supplies materials
- It offers easy adaptability to a variety of similar analyzers of functional cores of analyzer with toolbox-like elements.
- It allows for easy service, low spare parts cost and low effort for field service and training due to similar or identical components in various installations.
- It allows for good reliability of components and installations due to reuse and a high level of experience and understanding of these components over time.
- Software engineering to control different installations can benefit from reusing available libraries.
- Hardware and software effort and cost can be lowered once the toolbox components and libraries are developed.
- Time to market can be reduced for a new design

It is obvious for a skilled person that the follwing embodiements are within the scope of the present disclosure
- An alternative design could incorporate a different number of lane drives or lane change drives per Track device.
- An alternative design could be realized with different dimensions of lane drives or lane change drives per Track device.
- Loading, unloading, buffering, storage and indentification of carriers or supplies can be established differently.
- The design can support different from the shown carriers for different from the shown numbers of samples, reagents or other supplies
- The design could incorporate all types of drive and sensing technologies for carriers, bottles, tubes, consumables etc.
- The design can be installed into analyzers, in combination with analyzers to the analyzers directly, to the lab (e.g. floor) or to a common platform with the analyzers.

The foregoing description of the preferred embodiment of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents. The entirety of each of the aforementioned documents is incorporated by reference herein.

## Claims

1. A track device for transport of carrier for supplying multiple work-cell bound analyzers as well as multiple cores of a single analyzer with samples and/or material for processing or analyzing samples, wherein the track device comprises
- at least two tracks for transportation at least one carrier;
- at least one lane change drive allowing to move a carrier from one track to another track; and
- at least one of the at least two tracks having access to an analyzer.

2. The track device of claim 1, wherein the at least two tracks are guided rails.

3. The track device of claim 1 or 2, wherein a first of the at least two tracks is configured for transporting material for loading and unloading material and a second one of the at least two tracks is configured for transporting material for access of a work cell or core of a single analyzer.

4. The track device of any one of claims 1 to 3, comprising at least three tracks for transportation, wherein the outer tracks are accessible for a neighboring work cell or core of a single analyzer.

5. The track devices of any one of claims 1 to 4, wherein the tracks for transportation are located in the middle between or at one side of a work-cell bound analyzer or multiple core of a single analyzer.

6. The track device of any one of claims 1 to 5, further comprising at least four tracks, wherein of the tracks located in the middle is configured to transport material in a forward direction and one of the tracks in the middle is configured to transport material in a reverse direction.

7. The track device of claim 1 to 6, wherein the track change drive is located at one end or in-between the tracks.

8. The use of a track device of any one of claims 1 to 7 with multiple work-cell bound analyzers as well as multiple cores of a single analyzer.
